**Europäisches Patentamt**

**European Patent Office**

**Office européen des brevets**

(19)

(11) Publication number: **0 130 840**
A2

(12) # EUROPEAN PATENT APPLICATION

(21) Application number: **84304534.5**

(22) Date of filing: **02.07.84**

(51) Int. Cl.⁴: **G 21 C 3/32**, F 16 B 35/00

(30) Priority: **01.07.83 US 509936**

(43) Date of publication of application: **09.01.85**
**Bulletin 85/2**

(84) Designated Contracting States: **CH DE FR GB IT LI SE**

(71) Applicant: **Quadrex Corporation, 1700 Dell Avenue, Campbell California 95008 (US)**

(72) Inventor: **Spalaris, Constantine N., San Jose, Santa Clara California (US)**
Inventor: **Vollmer, Regis, Trafford, Westmoreland Pennsylvania (US)**

(74) Representative: **Enskat, Michael Antony Frank et al, 5 Richards Close, Hillingdon Middlesex UB10 0BT (GB)**

(54) **Alignment pin for guide tube assembly in nuclear power plant reactor vessel.**

(57) Guide tube alignment pins are secured to a flange at the lower end of a guide tube of a nuclear power plant reactor vessel. They extend downwardly from the flange and enter openings in an upper core plate of a guide tube assembly as the guide tube is lowered into place to align the center of the guide tube with the center of the fuel bundle or fuel element so that the cluster control rod in the guide tube can enter the fuel bundle with the least amount of drag and in the proper time. The guide tube alignment pins include guide fingers at the lower portions thereof which enter the openings in the upper core plate for positioning the center of the guide tube over the center of the associated fuel bundle or fuel element. Intermediate the ends thereof, the guide tube alignment pins are formed with a Morse taper to increase the width of the shanks at the areas subject to frequent fractures. A locking device at the top of the guide tube alignment pins, which is integrally formed with a locking cup, is crimped for securement of the upper ends of the guide tube alignment pins to the flange at the lower end of the guide tube.

Guide tube alignment pins have been made of Ni-Cr-Fe alloy X-750. To reduce stress corrosion cracking of the guide tube alignment pins, the guide tube alignment pins are heat treated by solution annealing at 2000°F ± 50°F for a minimum of one hour and then cooling to ambient temperature. This procedure is followed by heating the guide tube alignment pins at 1300°F ± 50°F for approximately twenty hours and then cooling to ambient temperature.

ALIGNMENT PIN FOR GUIDE TUBE ASSEMBLY IN NUCLEAR POWER PLANT REACTOR VESSEL.

The present invention relates in general to reactor core of a nuclear power plant, and more particularly to an alignment pin for a guide tube of a reactor core.

Guide tube alignment pins have heretofore been used for aligning the center of a guide tube with the center of a fuel bundle or a fuel element. The guide tube alignment pins were secured to and protruded downwardly from a flange at the lower end of a guide tube of the guide tube assembly and had aligned the center of the guide tube with the center of a fuel element or a fuel bundle.

However, the guide tube alignment pins were subject to frequent fractures and failures. Such fractured pins became mechanical obstructions and sometimes damaged parts by being impelled as a missile. It appears that the force of water in the reactor vessel propelled the fractured pin as a projectile.

The guide tube alignment pins heretofore employed were subject to frequent fractures and failures due, in part, to the following:

    a.  Stress corrosion cracking;

    b.  Pins not designed with proper radii and an excessive number of sharp edges which form notches and stress risers;

    c.  Crack propagation; and

    d.  Corrosion fatigue.

Heretofore, a nut was secured to the upper end of the guide tube alignment pin by a dowel welded to the nut. Borated water is used in the pool of the fuel assembly as a cooling agent. It is difficult to obtain a satisfactory weld in borated water.

A guide tube alignment pin for aligning the center of a guide tube of a guide tube assembly with the center of a fuel bundle or element in which the guide tube alignment pin is contoured to reduce fractures and is constructed to reduce failures by reducing stress corrosion cracking, crack propagation and corrosion fatigue.

The guide tube alignment pin intermediate the ends thereof is formed with a taper having increased width at the location more susceptible to fractures.

A feature of the present invention is the crimping of a locking device for improved securement of the upper section of the guide tube alignment pin to a flange at the lower end of the guide tube.

To reduce the fractures of the guide tube alignment pins and to reduce the failures of guide tube alignment pins, a reduction of tensile load stresses has been achieved by forming the shank of the guide tube alignment pin with a Morse taper. Many guide tube alignment pin failures occurred at the base of the shank and particularly the location at which the shank has a change in diameter. Thus, the taper of the shank is formed with an increased diameter at the location where the fractures or failures frequently occur. The stress is usually applied to the alignment pin by either mechanical loading by thermal expansion of surrounding structural members or by a mass of flowing coolant.

By heat treating the guide tube alignment pin made of Ni-Cr-Fe alloy X-750 or other nickel base alloys, continuous or semicontinuous carbides at the grain boundaries are produced in the guide tube alignment pin. The production of the continuous carbides or semicontinuous carbides at the grain boundaries of the guide tube alignment pin made of Ni-Cr-Fe alloy X-750 and other nickel base alloys make the alignment pins more resistant to stress corrosion cracking, crack propagation and corrosion fatigue.

It has been found that the heat treatment herein disclosed, such as at 2000°F for a minimum of one hour, improves the stress corrosion resistance of the guide tube alignment pin made of Ni-Cr-Fe alloy X-750 and other nickel base alloys for service in pressurized water reactors below 680°F. It has also been found that the heat treatment herein disclosed, such as at 2000°F for a minimum of one hour, improves the resistance of the guide tube alignment pin made of Ni-Cr-Fe alloy X-750 and other nickel base alloys to fatigue crack growth. Thus, in the event a crack has been initiated in the guide tube alignment pin under load, the heat treatment herein employed for a guide tube alignment pin, such as at 2000°F for a minimum of one hour, made of Ni-Cr-Fe alloy X-750 and other nickel base alloys provides the metallurgical microstructure having improved resistance to crack growth. Lastly, it has been found that fatigue frequency does not affect crack growth rates when a guide tube alignment pin made of Ni-Cr-Fe alloy X-750 and other nickel base alloys has been heat treated as herein disclosed, such as at 2000°F for a minimum of one hour.

Reference is now made to the accompanying drawings wherein:-

Figure 1 is an elevation view of a guide tube assembly employing guide tube alignment pin embodying the present invention.

Figure 2 is an elevation view of a guide tube disposed within a sheath and illustrated with guide tube alignment pins embodying the present invention.

Figure 3 is an enlarged elevation view of the guide tube alignment pin embodying the present invention illustrated with a locking cup shown in section, a locking device shown in section before crimping and a section view of a fragmentation of the flange at the lower end of a guide tube.

Figure 4 is a plan view of the guide tube alignment pin, locking device and locking cup shown in Figure 3.

Figure 5 is a horizontal section view of the guide tube alignment pin taken along line 5-5 of Figure 3.

Figure 6 is an elevation view of the guide tube alignment pin, locking cup and locking device shown in Figure 3.

DESCRIPTION OF THE PREFERRED EMBODIMENT

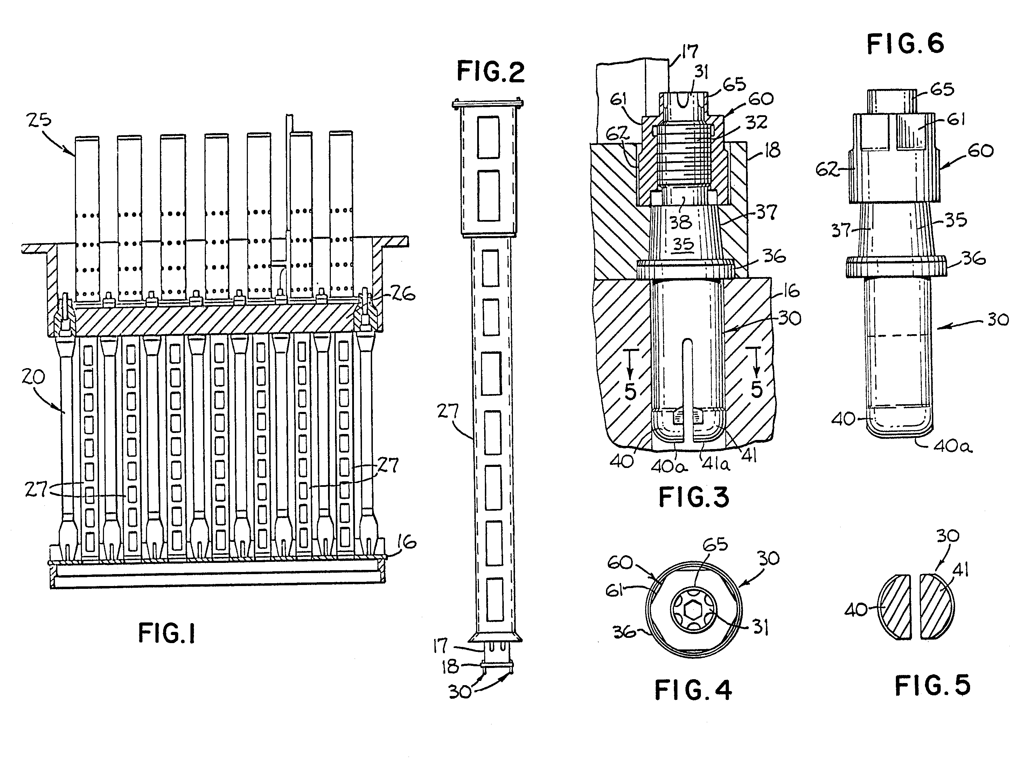

In Figure 1, is illustrated a guide tube assembly 20 which is part of an upper support assembly 25 of a conventional reactor vessel of a pressurized water reactor. Also included in the upper support assembly 25 are an upper tube support plate 26, an upper core plate 16 and support columns or sheaths 27. Disposed within the sheaths 27, respectively, are guide tubes 17 (Figure 2).

Disposed within the guide tubes 17, respectively, are control rod drive shafts and the control rods, not shown. The control rods include boron carbide. When the boron carbide is removed from the core, the fuel elements or fuel bundles start up. When the boron carbide is inserted into the core, the fuel elements or fuel bundles are shut down. Each control rod is aligned with a fuel bundle or fuel element. Each guide tube 17 guides its associated control rod for alignment with an associated fuel bundle or element. Thus, it is important to accurately align the guide tubes 17 with the fuel elements. Guide tube split or alignment pins 30 (Figures 3 and 6) are secured to an annular flange 18 at the lower end of the guide tube 17 and serve to center the center of the guide tubes 17, with the center of the fuel bundle or fuel element of the fuel assembly, not shown, so that the control rod disposed within the guide tube 17 can enter the fuel bundle or fuel element with a minimum of drag and in the proper time interval.

The guide tube split or alignment pin 30 (Figures 3-6) comprises a shank 35 having a cylindrical wall section 31 (Figures 3 and 4) adapted for crimping and a threaded section 32 (Figure 3). Above a base or flange 36 of the guide tube split or alignment pin 30, the shank 35 is formed with a taper 37 so that the width of the shank 35 is increased at the section thereof which is most susceptible to fracturing. In the preferred embodiment, the taper 37 formed on the shank 35 is a No. 3 Morse standard taper. Between the taper 37 and the threaded wall 32, the shank 35 is formed with a cylindrical wall 38.

The guide tube alignment pin 30 comprises guide fingers 40 and 41, which are disposed below the base 36. At the distal ends thereof, the guide fingers 40 and 41 are formed with a parabolic wall 40a and 41a, respectively. The parabolic contour at the distal ends of the guide fingers 40 and 41 serves to provide an equal distribution of the load applied against the distal ends of the guide fingers 40 and 41. By improving the load distribution applied against the distal ends of the guide fingers 40 and 41, the failure of the guide tube split pin due to fractures has been reduced.

The guide fingers 40 and 41 enter openings formed in the upper core support plate 16 to align the center of the guide tube 17 with the center of the associated fuel element or fuel bundle. The parabolic configuration of the distal end of the guide fingers 40 and 41 serves to facilitate the alignment by affording greater manueverability to the movement of the distal ends of the guide fingers 40 and 41 in the alignment operation.

For locking the guide tube split pin 30 to the flange 18 at the lower end of the guide tube 17, a locking device or cup 60 (Figures 3 and 6) is disposed in threaded engagement with the threaded section 32 of the guide tube alignment pin 30. The locking cup 60 includes a hexagonally walled section 61, which is rotated by a suitable tool to secure the locking cup 60 on the guide tube alignment pin 30 until the lower end or flange 62 thereof engages the flange 18 (Figure 3).

A crimp type locking device or nut 65 (Figures 3 and 6), which is integrally formed with the locking cup 60, is disposed adjacent the flat walled section 31 of the shank 35 of the guide tube alignment pin 30 and surrounds the same. By means of a suitable crimping tool, the crimp type locking device 65 is crimped securely to the cylindrical wall section 31 of the shank 35 of the guide tube alignment pin 30.

Initially, the Ni-Cr-Fe alloy X-750 is prepared into ingots by vacuum arc remelt or electroslag remelt processes. Ni-Cr-Fe has also been referred to as Inconel alloy X-750. These processes are conventional and well-known in the art. Thereupon, each ingot is subjected to hammering, upsetting and forging sequences to produce a minimum reduction of cross-sectional area of 35 per cent. At this time, the ingots reduced in cross-sectional area are machined to form the guide tube alignment pins 30. The machining of all surfaces should be stress free.

At this time, the guide tube alignment pins 30 made of Ni-Cr-Fe alloy X-750 are subject to heat treatment. The heat treatment of the guide tube alignment pins 30 includes solution annealing at 2000°F ± 50°F (1095°C ± 26°C) for at least one hour. Thereupon, the guide tube alignment pins 30 are air or furnace cooled to ambient temperature. Now, the guide tube alignment pins 30 are heat treated at 1300°F ± 50°F (704°C ± 28°C) for twenty hours. The guide tube alignment pins 30 are then air or furnace cooled to ambient temperature. During the heat treatment the sulphur content of the atmosphere should not exceed one part per million by weight.

While the preferred embodiment of the present invention subjects the machined guide tube alignment pin 30 to heat treatment, it is apparent that the heat treatment can be applied to the Ni-Cr-Fe alloy X-750 before the machining operation. The Ni-Cr-Fe alloy X-750 includes approximately 70% nickel, 15% chromium, 7% iron, 3% titanium and .7% aluminum, et cetera. Other alloys of substantially similar properties or substantially similar content are deemed to be included within the purview of the present invention, i.e. Ni-Cr-Fe 718, alloy A-286, other nickel base alloys or the like. The Ni-Cr-Fe alloy 718 includes approximately 53% nickel, 19% chromium, 18% iron, .9% titanium, .5% aluminum, et cetera. The alloy A-286 includes approximately 26% nickel, 15% chromium, 2% titanium, .3% aluminum, 1.3% molybdenum, other metals and substantially the balance in iron. Ni-Cr-Fe 718 has also been referred to as Inconel 718.

CLAIMS.

1. A guide tube alignment pin (30) for aligning a guide tube (17) with a fuel bundle or fuel element in a nuclear power reactor vessel comprising:

(a) a guide finger (40); and

(b) a shank (35) oppositely directed from said guide finger (40), said shank (35) being tapered (37) to increase in width at the area thereof having greater susceptibility to fracture.

2. A guide tube alignment pin (30) as claimed in claim 1 wherein said taper (37) is a Morse taper.

3. A guide tube alignment pin (30) as claimed in claim 1 and comprising another guide finger (41) disposed in parallel spaced relation with said first mentioned guide finger (40) to form a split pin.

4. A guide tube alignment pin assembly for aligning a guide tube (17) with a fuel bundle or element of a nuclear power reactor vessel comprising:

(a) a guide tube alignment pin (30) comprising a guide finger (40) and a shank (35) oppositely directed from said guide finger (40), said shank (35) being formed with a threaded section (32) spaced from said guide finger (40) and a taper section (37) between said guide finger (40) and said threaded section (32), said tapered section (37) being contoured to increase the width at the area of said shank (35) having a section at the distal end thereof suitable for crimping;

(b) a first locking device (60) disposed in threaded engagement with the threaded section (32) of said shank (35); and

(c) a second locking device (65) at the distal end of said shank (35) crimped to the section of said shank (35) suitable for crimping.

5. A guide tube alignment pin assembly as claimed in claim 4 wherein said guide tube alignment pin (30) comprises another guide finger (41) disposed in parallel spaced relation with said first mentioned guide finger (40) to form a split pin.

6. A guide tube alignment pin assembly as claimed in claim 4 and comprising a flange (18) at the lower section of a guide tube (17) disposed perpendicular to the axis of said guide tube alignment pin (30), said flange (18) having a cylindrical opening formed therein providing oppositely directed annular shoulders and a reduced diameter opening between said oppositely directed annular shoulders, said first locking device (65) being formed with an annular flange (62) seated on one of said annular shoulders, said guide tube alignment pin (30) being formed with a base (36) between said shank (35) and said guide fingers (41 and 41), said base (36) having an annular flange abutting against the other of said shoulders, said fingers (40 and 41) projecting downwardly and freely from said flange (18), said tapered section (37) of said shank (35) being disposed in said reduced diameter opening of said opening formed in said flange (18).

7. A guide tube alignment pin assembly as claimed in claim 6 wherein said base (36) is nested in said cylindrical opening of said flange (18) and said tapered section (37) of said shank (35) is nested in said reduced diameter opening of said cylindrical opening formed in said flange (18).

8. A guide tube alignment pin (30) for aligning a guide tube (17) with a fuel bundle or fuel element in a nuclear power reactor vessel comprising:

    (a) a guide finger (40) made of a nickel base alloy;

    (b) a shank (35) made of a nickel base alloy oppositely directed from said guide finger (40), said shank (35) being tapered (37) to increase in width at the area thereof having greater susceptiblity to fracture;

    (c)  said guide finger (40) and said shank (35) being heat treated to produce continuous or semi-continuous carbides at the grain boundaries of said guide tube alignment pin (30).

9.  A guide tube alignment pin (30) as claimed in claim 8 wherein said taper (37) is a Morse taper.

10.  A guide tube alignment pin (30) as claimed in claim 8 and comprising another guide finger (41) made of a nickel base alloy disposed in parallel spaced relation with said first mentioned guide finger (40) to form a split pin, said other guide finger (41) being heat treated to produce continuous or semi-continuous carbides at the grain boundaries of said guide tube alignment pin (30).

11.  A guide tube alignment pin (30) as claimed in claim 9 and comprising another guide finger (41) made of a nickel base alloy disposed in parallel relation with said first mentioned guide finger (40) to form a split pin, said other guide finger (41) being heat treated to produce continuous or semi-continuous carbides at the grain boundaries of said guide tube alignment pin (30).

12.  A guide tube alignment pin (30) for aligning a guide tube (17) with a fuel bundle or a fuel element in a nuclear power reactor vessel comprising:

    (a)  a guide finger (40) made of Ni-Cr-Fe; and

    (b)  a shank (35) made of Ni-Cr-Fe and oppositely directed from said guide finger (40), said shank (35) being tapered (37) to increase in width at the area thereof having greater susceptibility to fracture,

    (c)  said guide finger (40) and said shank (35) being heat treated by annealing at 2000°F $\pm$ 50°F for at least one hour and then cooled to ambient temperature.

13.  A guide tube alignment pin (30) as claimed in claim 10 wherein said annealing is solution annealing.

14. A guide tube alignment pin assembly for aligning a guide tube (17) with a fuel bundle or element of a nuclear power reactor vessel comprising:

(a) a guide tube alignment pin (30) made of a nickel base alloy comprising a guide finger (40) and a shank (35) oppositely directed from said guide finger (40), said shank (35) being formed with a threaded section (32) spaced from said guide finger (40) and a taper section (37) between said guide finger (40) and said threaded section (32), said tapered section (37) being contoured to increase the width at the area of said shank having a section at the distal end thereof suitable for crimping;

(b) a first locking device (60) disposed in threaded engagement with the threaded section (32) of said shank (35); and

(c) a second locking device (65) at the distal end of said shank (35) suitable for crimping,

(d) said guide tube alignment pin (30) being heat treated at 2000°F $\pm$ 50°F for at least one hour and then cooled to ambient temperature.

15. A method of producing a guide tube alignment pin (30) for aligning a guide tube (17) with a fuel bundle or a fuel element in a nuclear power reactor vessel in which the guide tube alignment comprises a guide finger (40) and a shank (35) oppositely directed from the guide finger (40) comprising the steps of:

(a) forming Ni-Cr-Fe into an ingot;

(b) machining the ingot of Ni-Cr-Fe into said guide tube alignment pin (30); and

(c) heat treating said Ni-Cr-Fe.

16. A method as claimed in claim 15 wherein said heat treatment produces continuous or semi-continuous carbides at the grain boundaries.

17. A method as claimed in claim 15 wherein said heat treatment comprises the step of annealing said Ni-Cr-Fe at 2000°F ± 50°F for a minimum of one hour, and cooling said Ni-Cr-Fe to ambient temperature.

18. A method as claimed in claim 15 wherein said heat treating of said Ni-Cr-Fe is performed after the machining of said Ni-Cr-Fe.

19. A method as claimed in claim 13 wherein said ingot of Ni-Cr-Fe is reduced in cross-section before the machining of said Ni-Cr-Fe.

FIG.I

FIG.2

FIG.3

FIG.4

FIG.5

FIG.6

1/1

0130840